# EUROPÄISCHE PATENTANMELDUNG

(11) **EP 2 397 054 A1**
(43) Veröffentlichungstag der Anmeldung: **21.12.2011**
(21) Anmeldenummer: 10405116.4
(22) Anmeldetag: 15.06.2010
(51) Int. Cl.: A47J 31/46, A47J 31/54, A47J 31/56

(54) **Brühvorrichtung mit einem Kaffee-Nacherhitzer**

(71) Anmelder: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(57) **Zusammenfassung**

Die Brühvorrichtung (10) umfasst eine Brüheinheit (30) zum Brühen eines Kaffeegetränkes, wobei die Brüheinheit (30) mit einer Brühwasser-Zuführleitung (31) zum Zuführen von Brühwasser in die Brüheinheit (30) und mit einer Kaffee-Ausgabeleitung (40) zur Ausgabe eines in der Brüheinheit gebrühten Kaffeegetränkes verbunden ist, welche Kaffee-Ausgabeleitung (40) einen mit der Brüheinheit (30) verbundenen eingangsseitigen Endbereich (41) zur Aufnahme des jeweils gebrühten Kaffeegetränks und einen ausgabeseitigen Endbereich (42) zur Ausgabe des jeweils gebrühten Kaffeegetränks aufweist. Die Brühvorrichtung (10) weist ferner einen Kaffee-Nacherhitzer (50) zum Nacherhitzen des jeweils gebrühten Kaffeegetränks in der Kaffee-Ausgabeleitung (40) auf, wobei der Kaffee-Nacherhitzer (50) zwischen dem eingangsseitigen Endbereich (41) der Kaffee-Ausgabeleitung (40) und dem ausgabeseitigen Endbereich (42) der Kaffee-Ausgabeleitung (40) angeordnet ist.

## Beschreibung

Die Erfindung betrifft eine Brühvorrichtung sowie eine Kaffeemaschine zum Bereiten und Ausgeben von Kaffee mit einer Brühvorrichtung und ein Verfahren zum Brühen und Ausgeben eines Kaffeegetränkes.

Die Erfindung betrifft insbesondere eine Brühvorrichtung zum Brühen eines Kaffeegetränkes mit einer Brüheinheit, wobei die Brüheinheit eingangsseitig mit einer Brühwasser-Zufuhrleitung und ausgangsseitig mit einer Kaffee-Ausgabeleitung verbunden ist.

Eine Brühvorrichtung für Kaffee, welcher eingangsseitig heisses Brühwasser zugeführt wird und welche an ihrem Ausgang während des Brühvorgangs bzw. nach dessen Beendigung fertig gebrühten Kaffee ausgibt, ist an sich bekannt. Eine derartige Brühvorrichtung wird zumeist mit Heisswasser bzw. Brühwasser gespeist, welches aus einem Wassertank kommend zunächst mit Hilfe von Pumpen- oder ähnlichen Einrichtungen durch einen Durchlauferhitzer geleitet und dort erhitzt wird. Weiterhin sind auch solche Brühvorrichtungen bekannt, bei welchen das Brühwasser in einem grösseren Brühwassertank zunächst komplett erhitzt und dann der Brüheinheit zugeleitet wird. In jedem Fall durchläuft das Brühwasser nach dem Erhitzungsvorgang dann noch eine mehr oder weniger lange Leitungsstrecke, bis der Eingang der Brühvorrichtung erreicht ist.

Hierbei ergibt sich insbesondere das Problem, dass die Leitungsstrecke, die zwischen der Brühwasserheizeinrichtung und dem Eingang der Brüheinheit liegt, je nach Art, Zeitpunkt und Häufigkeit vorausgegangener Brühvorgänge unterschiedliche Temperaturen aufweisen kann. Damit kann nicht vorausgesagt werden, welche Brühwassertemperatur am Eingang der Brüheinheit tatsächlich zur Verfügung steht. Dies ist insofern von Nachteil, als dass eine zu hohe Brühtemperatur vermehrt Bitterstoffe beispielsweise aus dem aufzubrühenden Kaffee extrahiert, wodurch der ausgegebene Kaffee bitter schmeckt.

Andererseits ist eine zu niedrige Brühtemperatur ebenso wenig wünschenswert, da in diesem Fall die gewünschten Aromen nicht aus dem Kaffeemehl gelöst werden und der ausgegebene Kaffee demnach eher fad schmeckt. Brühtemperaturen im Bereich von 90 bis 95°C gelten im Allgemeinen als ideal.

Zu diesem bekannten Problem sind aus dem Stand der Technik mehrere Lösungen bekannt, um die eingangsseitige Brühwassertemperatur an der Brüheinheit unter Berücksichtigung des zusätzlichen Leitungswegs zwischen der Brühwasser-Erhitzungseinrichtung und der eigentlichen Brüheinheit bei Bedarf weiter zu erhöhen.

Aus der US-Patentschrift 6,701,068 B2 ist beispielsweise eine Brühwasser-Hilfserhitzungseinrichtung bekannt, welche unmittelbar vor einem Bereich angeordnet ist, aus welchem das fertig erhitzte Brühwasser ausgegeben wird. In Flussrichtung vor der besagten Brühwasser-Hilfserhitzungseinrichtung befindet sich die eigentliche Brühwasser-Haupterhitzungseinrichtung, welche eingangsseitig kaltes Frischwasser bezieht, erhitzt und anschliessend an ihrem Ausgang einem Leistungs- oder Rohrstück zuleitet, welches sie mit der Brühwasser-Hilfserhitzungseinrichtung verbindet. Eine mögliche unerwünschte Abkühlung des aufgebrühten Wassers vor dem Brühvorgang findet genau in diesem Leitungs- bzw. Rohrstück statt und wird von der Brühwasser-Hilfserhitzungseinrichtung wieder ausgeglichen, so dass genügend heisses Brühwasser zum Brühen zur Verfügung steht.

Eine ähnliche Lösung ist aus der US-Offenlegungsschrift 2005/0066820 A1 bekannt, wobei hier in einem Boiler vorerhitztes Brühwasser auf dem Weg zum Eingang der Brüheinheit ebenfalls durch ein weiteres als Durchlauferhitzer ausgebildetes Heizelement hindurchgeleitet wird, wobei in diesem Fall eine bedarfsweise Ansteuerung des zusätzlichen Heizelements mit Hilfe einer Steuereinheit vorgenommen wird.

Aus der US-Offenlegungsschrift 2008/0008461 A1 ist eine Lösung bekannt, bei welcher die Brühwassertemperatur mit Hilfe einer einzigen Brühwasser-Erhitzungsvorrichtung durch Zwischenschaltung eines Temperatursensors in den Brühwasserpfad zwischen dem Brühwasser-Erhitzer und der Brüheinheit durch Regelung konstant gehalten wird. Auch bei dieser aus dem Stand der Technik bekannten Lösung wird also versucht, die Brühwassertemperatur am Eingang der Brüheinheit durch Regelung auf einem konstanten Wert zu halten.

Schliesslich ist aus der DE 699 11 675 T2 eine Anordnung bekannt, bei welcher die Brüheinheit - in diesem Fall einer Espressomaschine - aus einer Betriebsstellung in eine Ruhestellung schwenkbar ist. Nach dem Schwenken in die Ruhestellung liegt ein wärmeübertragender Bereich der Brüheinheit an einem Heizelement an. Im Zuge des nachfolgenden Brühvorgangs wird die so (in der Ruhestellung) erwärmte Brüheinheit wieder in ihre Betriebsposition zurückverschwenkt, und kann somit eine ggf. zu niedrige Temperatur des zugeführten Brühwassers kompensieren.

Der vorliegenden Erfindung liegt die Aufgabe zugrunde, eine Brühvorrichtung der eingangs genannten Art anzugeben, mit welcher in einer einfach zu realisierenden, aber dennoch effektiven Weise eine stets optimale Qualität des ausgegebenen Kaffeegetränkes sichergestellt werden kann.

Eine weitere Aufgabe ist darin zu sehen, eine entsprechende Kaffeemaschine sowie ein entsprechendes Verfahren zum Brühen und Ausgeben eines Kaffeegetränkes mit stets optimaler Qualität anzugeben.

Im Hinblick auf die Brühvorrichtung wird die der Erfindung zugrunde liegende Aufgabe durch den Gegenstand des unabhängigen Patentanspruches 1 gelöst.

Die Brühvorrichtung umfasst eine Brüheinheit zum Brühen eines Kaffeegetränkes, wobei die Brüheinheit mit einer Brühwasser-Zuführleitung zum Zuführen von Brühwasser in die Brüheinheit und mit einer Kaffee-Ausgabeleitung zur Ausgabe eines in der Brüheinheit gebrühten Kaffeegetränkes verbunden ist und die Kaffee-Ausgabeleitung einen mit der Brüheinheit verbundenen eingangsseitigen Endbereich zur Aufnahme des jeweils gebrühten Kaffeegetränks und einen ausgabeseitigen Endbereich zur Ausgabe des jeweils gebrühten Kaffeegetränks aufweist.

Gemäss der Erfindung weist die Brühvorrichtung ferner einen Kaffee-Nacherhitzer zum Nacherhitzen des jeweils gebrühten Kaffeegetränks in der Kaffee-Ausgabeleitung auf, wobei der Kaffee-Nacherhitzer zwischen dem eingangsseitigen Endbereich der Kaffee-Ausgabeleitung und dem ausgabeseitigen Endbereich der Kaffee-Ausgabeleitung angeordnet ist.

Ein wesentlicher Punkt der Erfindung besteht darin, dass der Kaffee-Nacherhitzer an oder in der Kaffee-Ausgabeleitung angeordnet ist und das gebrühte Kaffeegetränk mittels des Kaffee-Nacherhitzers erhitzt werden kann, wenn es sich in der Kaffee-Ausgabeleitung befindet bzw. die Kaffee-Ausgabeleitung in Richtung auf den ausgabeseitigen Endbereich der Kaffee-Ausgabeleitung durchströmt. Hierdurch kann der eigentliche Brühvorgang in der Brüheinheit bei der optimalen Brühtemperatur durchgeführt werden, ohne dass die Gefahr besteht, dass sich das gebrühte Getränk - beispielsweise durch eine längere Betriebspause - nach dem Austreten aus der Brüheinheit auf dem Weg bis in eine Kaffee-Ausgabeeinrichtung soweit abkühlen kann, dass die geschmackliche Qualität des gebrühten Getränks beeinträchtigt wird.

Zwar wurde im Stand der Technik bereits das Problem erkannt, dass sich eine zu niedrige Brühtemperatur bzw. eine stark schwankende Brühtemperatur negativ auf die Qualität des aus der Brüheinheit austretenden aufgebrühten Getränks, im Regelfall Kaffee, auswirken kann. Allerdings wurde bisher nicht erkannt, dass nach erfolgtem Brühen und bei Austritt aus der Brüheinheit das gebrühte Getränk im Regelfall durch zusätzliche Leitungen hindurch einer Kaffee-Ausgabeeinheit zugeführt werden muss, was sich wieder negativ auf die Qualität des aufgebrühten Getränks auswirken kann, da die Gefahr besteht, dass das Getränk vor der Ausgabe aus der Kaffee-Ausgabeeinheit wieder abkühlt.

Hierbei ist zu berücksichtigen, dass die Temperatur des am Ende der Kaffee-Ausgabeeinheit ausgegebenen Kaffeegetränks letztlich wiederum davon abhängt, auf welchem Temperaturniveau sich diese hinter der Brüheinheit liegenden Leitungen bzw. die Kaffee-Ausgabeeinrichtung befinden. Insbesondere wird die geschmackliche Qualität des gebrühten Getränks negativ beeinflusst, wenn dessen Temperatur zu niedrig liegt. Im Falle von Kaffee wird z.B. eine Temperatur des ausgegebenen Kaffees von 80 bis 85 °C angestrebt. Diese (Ideal-)Temperatur wird häufig insbesondere dann unterschritten, wenn die hinter dem Ausgang der Brüheinheit liegenden Teile, also die Kaffee-Ausgabeleitung und die zugehörige Kaffee-Ausgabeeinrichtung, z.B. nach einer längeren Betriebspause der Kaffeemaschine bis auf Zimmertemperatur abgekühlt sind.

In einer vorteilhaften Ausführungsform der Brühvorrichtung ist es beispielsweise vorgesehen, den Kaffee-Nacherhitzer dann in Betrieb zu setzen, wenn nach einem erfolgten Brühvorgang gebrühter Kaffee aus der Brüheinheit in die Kaffee-Ausgabeleitung eintritt. Auf diese Weise ist gewährleistet, dass der Nacherhitzer nur dann in Betrieb ist, wenn auch tatsächlich ein gebrühtes Getränk ausgegeben werden soll, was insbesondere aus Gründen der Energieersparnis von Vorteil ist. Zu diesem Zweck ist es vorteilhaft, den Nacherhitzer möglichst so auszubilden, dass er einerseits die in der Regel mit einem Heizelement erzeugte Wärme gut an die Kaffee-Ausgabeleitung überträgt und andererseits seinerseits eine kleine Masse aufweist, damit er im Sinne einer möglichst steilen Regelkurve bzw. kurzen Totzeit möglichst dynamisch auf eine Wiederinbetriebnahme nach einer möglichen Brühpause reagieren kann.

Gemäss einer weiteren Ausführungsform der vorliegenden Erfindung kann es aber gleichsam ebenso von Vorteil sein, den Kaffee-Nacherhitzer dann in Betrieb zu setzen, wenn das Zuführen von gebrühtem Kaffee aus der Brühvorrichtung in die Ausgabeleitung bereits beendet ist. Diese Möglichkeit kommt insbesondere unmittelbar nach dem Ende eines Brühvorgangs in Betracht, wenn sich noch Reste des aufgebrühten Getränks in der Ausgabeleitung befinden. In diesem Fall soll mit einem genügend lang andauernden Inbetriebsetzen des Nacherhitzers in der Ausgabeleitung eine Dampfblase erzeugt werden, welche bewirkt, dass sich in diesem Bereich der Ausgabeleitung ein Überdruck ausbildet. Hierdurch wird die sich noch in der Ausgabeleitung befindende Flüssigkeit in Richtung Kaffee-Ausgabeeinrichtung ausgetrieben, wodurch einerseits eine nahezu vollständige Ausgabe des aufgebrühten Getränks in die Tasse erreicht werden kann und andererseits eine längere Standzeit von älterem gebrühten Getränk in der Ausgabeleitung vermieden wird. Hierdurch ist dann auch gewährleistet, dass in einem nachfolgenden Brühvorgang nahezu keine Reste aus dem vorhergehenden Brühvorgang in die Ausgabeeinrichtung und damit in die Tasse gelangen. Dies ist einerseits wünschenswert, da natürlich auch diese Brühreste ihrerseits abkühlen können und damit die Temperatur des ausgegebenen gebrühten Getränks negativ beeinflussen können und andererseits - beispielsweise bei längeren Betriebspausen - ein Oxidieren bzw. Verderben dieser Brühreste in der Ausgabeleitung wirkungsvoll verhindert werden kann. Zu diesem Zweck kann es sinnvoll sein, den Nacherhitzer möglichst unmittelbar benachbart am ausgabeseitigen Ende der Brüheinheit anzuordnen, damit die durch den Betrieb des Kaffee-Nacherhitzers beeinflusste Strecke der Kaffee-Ausgabeleitung und damit die Strecke, die wirkungsvoll durch Dampfblasenbildung entleert werden kann, möglichst einen Grossteil der Gesamtstrecke der Ausgabeleitung zwischen der Brüheinheit und der Ausgabeeinrichtung ausmacht.

In einer konkreten Ausgestaltung der Brühvorrichtung ist vorgesehen, dass der Nacherhitzer ein Rohr aufweist, wobei benachbart zu dem Rohr ein Heizelement verläuft. Dieses Heizelement weist seinerseits Stromanschlüsse auf, wobei nach Anlegen einer elektrischen Spannung die eingesetzte Energie in Wärme umgesetzt wird und sich das Heizelement aufheizt. Das Rohr wird in den Flüssigkeitspfad der Ausgabeleitung eingesetzt und weist dafür einen Kaffee-Zuführanschluss sowie einen Kaffee-Ausgabeanschluss auf, welche in jeweils gegenüberliegenden Enden des Rohres münden. Selbstverständlich ist es aber ebenso denkbar, den Nacherhitzer in Form eines extern aufgebrachten Heizelements auszubilden, welches auf eine bestehende, durchgehende Kaffee-Ausgabeleitung unter Ausbildung eines ausreichenden Wärmekontakts beispielsweise durch Kleben oder Schweissen aufgebracht wird.

Ferner kann aber auch das erwähnte Rohr, welches in den Flüssigkeitspfad der Kaffee-Ausgabeleitung eingesetzt wird, mit dem benachbart verlaufenden Heizelement zumindest bereichsweise fest verbunden werden. Hierbei ist es wiederum insbesondere denkbar, das Rohr und das Heizelement bereichsweise zu verschweissen oder zu verkleben, um einen guten Wärmekontakt zu gewährleisten.

In einer weiteren konkreten, bevorzugten Ausgestaltung des Nacherhitzers der Brühvorrichtung ist zusätzlich zu dem Rohr und dem benachbart dazu verlaufenden Heizelement ferner ein Gehäuse vorgesehen, welches aus einem möglichst gut wärmeleitenden Material besteht. Zu diesem Zweck kommt insbesondere Aluminium in Betracht, jedoch sind auch weitere die Wärme gut leitende Materialien denkbar. Das Gehäuse kann dabei insbesondere ein Gussgehäuse sein, welches durch zumindest bereichsweises Umgiessen des Rohres und des Heizelements ausgebildet wird. Durch das Vorsehen eines Gehäuses für den Nacherhitzer wird nicht nur die mechanische Stabilität verbessert, durch die wärmespeichernden und wärmeleitenden Eigenschaften des verwendeten Materials wird insbesondere sichergestellt, dass im Zuge der Wärmeübertragung des Heizelements auf das Rohr möglichst geringe Wärmeverluste auftreten.

In einer konkreten Ausgestaltung der vorliegenden Erfindung ist das Rohr des Heizelements aus Chromstahl oder aus Aluminium gefertigt, wodurch eine definierte Wärmeübertragung von dem benachbart verlaufenden Heizelement auf das Rohr gewährleistet ist.

In einer weiteren konkreten Ausgestaltung der vorliegenden Erfindung ist vorgesehen, dass das als elektrische Widerstandsheizung ausgebildete Heizelement als keramische Dickschichtheizung ausgeführt ist. Hierzu wird das Heizelement auf einem keramischen Substrat aufgebracht, welches eine gewisse Dicke und damit eine begrenzte Wärmespeicherkapazität aufweist. Hierdurch ist durch eine relativ geringe Verzögerung im Regelverhalten des Heizelements ein gleichmässiger Wärmeübergang der durch das Heizelement erzeugten Wärme auf das benachbart verlaufende Rohr möglich. Selbstverständlich ist es jedoch ebenso denkbar, das Heizelement als gewöhnlichen PTC-Heizwiderstand (Heizwiderstand mit positivem TemperaturKoeffizienten) auszuführen. Im Falle der Verwendung eines gewöhnlichen PTC-Heizwiderstands kann bei vorab festgelegter Dimensionierung in vorteilhafter Weise erreicht werden, dass ohne zusätzliche Regelelemente eine Eigenregelung der Heiztemperatur erfolgt.

Die erfindungsgemässe Brühvorrichtung kann beispielsweise in Kombination mit einer Kaffeemaschine zum Bereiten und Ausgeben eines Kaffeegetränks verwendet werden und zu diesem Zweck zwischen einer Brühwasser-Zufuhrleitung, ggf. hinter entsprechenden den Zulauf des Brühwassers steuernden oder regelnden Ventilen, und einer Kaffee-Ausgabeleitung, ggf. mit einer zugehörigen Kaffee-Ausgabeeinrichtung, angeordnet sein.

Weitere Einzelheiten der vorliegenden Erfindung werden anhand einer beispielhaften Ausführungsform einer Kaffeemaschine anhand der beigefügten Zeichnungen erläutert, wobei die Kaffeemaschine mit einer erfindungsgemässen Brühvorrichtung ausgerüstet ist.

Es zeigen:
- Fig. 1: den schematischen Aufbau einer erfindungsgemässen Brühvorrichtung in Kombination mit einer Kaffeemaschine; und
- Fig. 2: eine dreidimensionale Ansicht eines in der erfindungsgemässen Brühvorrichtung zum Einsatz kommenden Kaffee-Nacherhitzers.

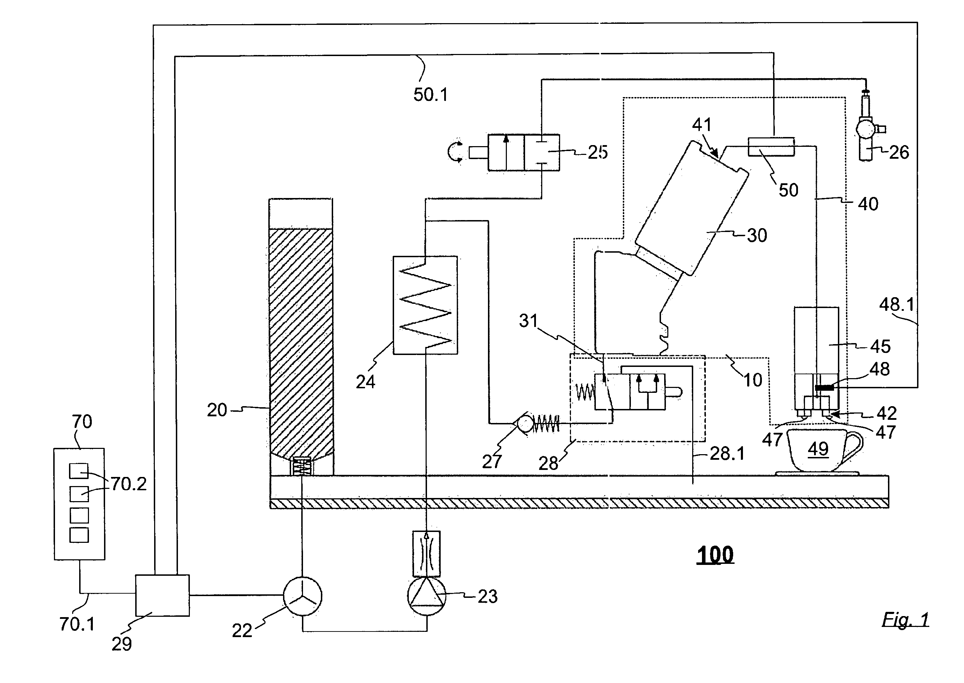

Die Figur 1 zeigt das Prinzipbild einer Kaffeemaschine 100 mit einer erfindungsgemässen Brühvorrichtung 10, wobei die Brühvorrichtung 10 in der gezeigten beispielhaften Ausführungsform aus einer Brüheinheit 30, einem Kaffee-Nacherhitzer 50 sowie einer Kaffee-Ausgabeleitung 40 besteht.

Die Kaffee-Ausgabeleitung 40 weist einen mit der Brüheinheit 30 verbundenen brüheinheitsseitigen Endbereich 41 sowie einen mit einer Kaffee-Ausgabeeinrichtung 45 verbundenen ausgabeseitigen Endbereich 42 auf. Im vorliegenden Beispiel ist die Kaffee-Ausgabeleitung 40 im ausgabeseitigen Endbereich 42 derart verzweigt, dass sie in zwei nebeneinander angeordnete Kaffee-Ausgangsöffnungen 47 mündet, durch welche ein in der Brüheinheit 30 gebrühtes Kaffeegetränk aus der Kaffee-Ausgabeleitung 40 fliessen kann, beispielsweise in ein unter den Kaffee-Ausgangsöffnungen 47 angeordnetes Trinkgefäss 49. In der gezeigten beispielhaften Ausführungsform ist der Kaffee-Nacherhitzer 50 in dem brüheinheitsseitigen Endbereich 41 angeordnet. Eingangsseitig ist die Brühvorrichtung 10 mit einer Brühwasser-Zufuhrleitung 31 verbunden, durch welche zum Zwecke des Brühens eines Kaffeegetränks in der Brüheinheit 30 dieser Brüheinheit 30 erhitztes Brühwasser zugeführt wird. Das Brühwasser in der Brühwasser-Zufuhrleitung weist dabei eine für das Brühen des jeweiligen Kaffeegetränks geeignete Temperatur, vorzugsweise im Bereich zwischen 90 und 95 °C auf. Die erforderliche Brühwassertemperatur in der Brühwasser-Zufuhrleitung 31 wird dabei durch Erhitzen in einem Brühwassererhitzer 24 gewährleistet. Dem Brühwassererhitzer 24 wird zu diesem Zweck Frischwasser aus einem Wassertank 20 zugeführt, wobei in der gezeigten beispielhaften Ausführungsform der benötigte Wasserdruck von einer Pumpe 23, welche zwischen dem Wassertank 20 und dem Brühwassererhitzer 24 angeordnet ist, aufgebaut wird.

Weiterhin ist ein Durchflussmesser 22 vorgesehen, welcher im Frischwasserweg zwischen dem Wassertank 20 und dem Brühwassererhitzer 24 angeordnet sein kann, um eine Information über die der Brühvorrichtung zugeführten Menge an erhitztem Frischwasser, also Brühwasser zur Verfügung zu stellen. Bei Erkennen einer positiven Durchflussmenge durch den Durchflussmesser 22 kann darauf geschlossen werden, dass momentan ein Brühvorgang stattfindet, und bei Nichterkennen einer Durchflussmenge kann aus dieser Information entsprechend abgeleitet werden, dass kein Brühvorgang stattfindet. Ein ähnlicher Durchflussmesser kann selbstverständlich auch zwischen dem Brühwassererhitzer 24 und der Brüheinheit 30 angeordnet sein. Weiterhin ist es denkbar, zusätzlich oder ausschliesslich einen ähnlichen Durchflussmesser in der Kaffee-Ausgabeleitung 40 anzuordnen. In diesen Fällen kann es erforderlich sein, diese ähnlichen Durchflussmesser auf höhere Flüssigkeitstemperaturen und/oder hinsichtlich der Verschmutzungsanfälligkeit durch Ablagerungen entsprechend robuster auszulegen.

Die Information, dass ein Brühvorgang stattfindet, wie auch die Information, dass ein Brühvorgang nicht stattfindet bzw. beendet wurde, kann ebenso gut mittels anderer Messeinrichtungen, beispielsweise Drucksensoren erfolgen. Weiterhin kann diese Information, insbesondere bei Integration der erfindungsgemässen Brühvorrichtung in automatisch arbeitende Kaffeemaschinen, durch die Programmablaufsteuerung dieser automatischen Kaffeemaschine oder des Kaffeeautomaten zur Verfügung gestellt werden.

Gemäss der beschriebenen Ausführungsform ist eine Steuereinheit 29 der Kaffeemaschine 100 mit der beschriebenen Einrichtung zum Erkennen einer Wasserzufuhr zu der Brüheinheit 30, d.h. dem Durchflussmesser 22, verbunden. Die Steuereinheit 29 weist ausserdem eine Verbindung 50.1 zu dem Kaffee-Nacherhitzer 50 auf und ist dazu ausgelegt, den Kaffee-Nacherhitzer 50 über die Verbindung 50.1 in Betrieb zu nehmen bzw. ausser Betrieb zu setzen. Dieses Aktivieren des Kaffee-Nacherhitzers 50 erfolgt nach einer entsprechenden Beurteilung der von dem Durchflussmesser 22 erhaltenen Information, d.h. nach einer Beurteilung, ob ein Brühvorgang stattfindet (das Durchlaufen von Wasser wird erkannt) oder nicht. Um eine Information darüber zu erhalten, ob ein Brühvorgang kürzlich abgeschlossen wurde sowie zum Einstellen einer möglichen Nachlaufzeit des Kaffee-Nacherhitzers 50 kann die Steuereinheit 29 ausserdem einen Zeitgeber aufweisen.

In die Brühwasser-Zufuhrleitung 31, d.h. in den Leitungsweg zwischen Brühwassererhitzer 24 und Brüheinheit 30, kann ein Auslaufventil 27 eingebaut sein, welches nach dem Aufbau eines entsprechenden Brühwasserdrucks durch die Pumpe 23 den Durchflusspfad des Brühwassers in Richtung der Brüheinheit 30 freigibt. Nach Beendigung eines Brühvorgangs und damit nach Abschalten der Pumpe 23 ist dann durch die entsprechende Rückschlagfunktion des Auslaufventils 27 gewährleistet, dass kein Brühwasser oder allenfalls geringe Mengen Brühwasser durch die Brühwasser-Zufuhrleitung 31 wieder in Richtung Brühwasser-Erhitzer 24 zurückfliessen.

Weiterhin kann eine Drainageventil-Einheit 28 in der Brühwasser-Zufuhrleitung zwischen dem Auslaufventil 27 und der Brüheinheit 30 vorgesehen sein, wobei beispielsweise nach Umschalten der Drainageventil-Einheit 28 (aus der in Fig. 1 dargestellten Stellung in eine andere Stellung) eine Verbindung zwischen der Brühwasser-Zufuhrleitung 31 und einer Drainageleitung 28.1 hergestellt werden kann, sodass beispielsweise nach dem Brühen eines Kaffeegetränks jeweils überschüssiges Brühwasser aus der Brüheinheit 30 der Drainageleitung 28.1 zugeführt werden kann und über die Drainageleitung 28.1 (in einen in Fig. 1 nicht dargestellten Behälter) abgeführt werden kann.

Ferner kann ein mit dem Ausgang des Brühwasser-Erhitzers 24 verbundenes Umschaltventil 25 vorgesehen sein, welches mit einer Aufschäumeinrichtung 26 zum Bereiten von Milchschaum verbunden ist.

Der Ablauf eines Brühvorgangs eines Kaffeegetränks gemäss der vorliegenden Erfindung wird im Folgenden beispielhaft anhand der in Fig. 1 gezeigten Ausführungsform näher erläutert.

Nach Inbetriebnahme der Pumpe 23 wird Frischwasser aus dem Wassertank 20 in Richtung des Brühwassererhitzers 24 gefördert, wobei die Menge durchlaufenden Wassers vom Durchflussmesser 22 erfasst und diese Information der Steuereinheit 29 zugeleitet wird. Der Brühwasser-Erhitzer 24 erhitzt das durch ihn laufende Frischwasser auf die zum Brühen des Kaffeegetränks erforderliche Temperatur, welche im Regelfall zwischen 90 und 95 °C liegt. Das Umschaltventil 25 ist in einer Weise geschlossen, dass kein erhitztes Brühwasser bzw. Dampf der Aufschäumeinrichtung 26 zugeführt wird. Demnach erstreckt sich der Flüssigkeitspfad des erhitzten Brühwassers hinter dem Brühwasser-Erhitzer 24 in Richtung auf das Auslaufventil 27, welches durch den sich aufbauenden Druckgradienten den Flüssigkeitspfad in der Brühwasser-Zufuhrleitung 31 in Richtung Drainageventil-Einheit 28 freigibt. Das Drainageventil ist entsprechend so geschaltet, dass das durchlaufende Brühwasser dem Eingang der Brüheinheit 30, welche Bestandteil der erfindungsgemässen Brühvorrichtung 10 ist, zugeführt wird.

Durch entsprechende Präparation, z.B. durch Befüllen mit Kaffeepulver, was auch automatisch erfolgen kann, befindet sich die Brüheinheit 30 zu Beginn des Brühvorgangs in einem brühbereiten Zustand. Das entsprechend temperierte Brühwasser, welches am Eingang der Brüheinheit 30 anliegt, wird innerhalb der Brüheinheit 30 nun dazu verwendet, das Kaffeegetränk zu bereiten und an den Ausgang der Brüheinheit 30 auszugeben. Dieses Zuleiten gebrühten Kaffeegetränks kann in einem einfachen Durchleiten des Brühwassers durch das Kaffeepulver mit entsprechender anschliessender Filterung bestehen. Es ist natürlich ebenso denkbar, dass die Bereitung des Kaffeegetränks in der Brüheinheit auf eine andere Weise erfolgt.

Das gebrühte Kaffeegetränk fliesst anschliessend in die Kaffee-Ausgabeleitung 40, an welcher der Kaffee-Nacherhitzer 50 angeordnet ist. Das fertig gebrühte Kaffeegetränk, welches dem Kaffee-Nacherhitzer 50 zugeleitet wird, weist unter anderem durch die Dauer des Brühvorgangs sowie eventuelle Wärmeverluste innerhalb der Brüheinheit 30 gegebenenfalls eine Temperatur auf, welche niedriger als die optimale Trinktemperatur des Kaffeegetränks ist. Als optimale Trinktemperatur kann beispielsweise ein Temperaturbereich von 80 bis 85 °C angesehen werden.

Daher wird bei erfolgender Kaffeeausgabe der Kaffee-Nacherhitzer 50, dessen Aufbau im Folgenden noch näher erläutert wird, in Betrieb gesetzt. Der Kaffee-Nacherhitzer 50 erhitzt dann das Kaffeegetränk in der Kaffee-Ausgabeleitung 40 auf eine Temperatur, welche derart hoch ist, dass gewährleistet ist, dass das Kaffeegetränk nach der Ausgabe in ein Trinkgefäss eine Temperatur annimmt, welche im Bereich der optimalen Trinktemperatur liegt. Aus der Kaffee-Ausgabeleitung 40 läuft das auf optimale Trinktemperatur erhitzte Kaffeegetränk anschliessend in die Kaffee-Ausgabeeinrichtung 45, welche dazu dient, den Kaffee möglichst gleichmässig und weitgehend ohne Spritzer über die Kaffee-Ausgangsöffnungen 47 in ein darunter angeordnetes Trinkgefäss 49 auszugeben.

Bei Abschluss des Brühvorgangs, d.h. wenn beispielsweise mittels des Durchflussmessers 22 ermittelt wurde, dass eine ausreichende Menge an Brühwasser der Brüheinheit 30 zugeführt wurde, werden der Brühwasser-Erhitzer 24 sowie die Pumpe 23 ausser Betrieb gesetzt, und der Durchfluss durch die Brühvorrichtung 10 wird unterbrochen. Es ist nun durch entsprechendes Auswerten des Zeitgebers der Steuereinheit 29 möglich, den Kaffee-Nacherhitzer 50 für eine begrenzte Zeit auch nach Abschluss des Brühvorgangs in Betrieb zu belassen bzw. nochmals in Betrieb zu setzen. Da keine weitere Flüssigkeit der Kaffee-Ausgabeleitung 40 zugeführt wird, wird damit die sich in der Kaffee-Ausgabeleitung 40 befindliche Restflüssigkeit weiter erhitzt. Durch Ausdehnung dieser, ggf. auch durch Ausbilden einer Dampfblase in unmittelbarer Nähe des brüheinheitsseitigen Endbereichs 41 der Kaffee-Ausgabeleitung 40 führt dieses Vorgehen zu einem Druckaufbau innerhalb der Kaffee-Ausgabeleitung 40, wodurch Restflüssigkeit, in diesem Falle also Reste des gerade frisch gebrühten Kaffeegetränks, in Richtung der Kaffee-Ausgabeeinrichtung 45 und somit in das Trinkgefäss ausgetrieben werden. Hierdurch ist gewährleistet, dass der Verbleib einer Restmenge gebrühten Kaffees in der Kaffee-Ausgabeleitung 40 weitgehend unterbunden wird. Dies ist einerseits wünschenswert, um bei einem möglichen anschliessendem Brühvorgang kein oder nur wenig in der Kaffee-Ausgabeleitung verbliebenes und ggf. abgekühltes Restgetränk der Kaffee-Ausgabeeinrichtung 45 zuzuführen, was die Getränketemperatur weiter herabsetzen würde. Andererseits ist dies auch aus hygienischen Gründen sinnvoll, da somit die Gefahr, dass bei längerer Standzeit die in der Kaffee-Ausgabeleitung 40 befindlichen Getränkereste verderben, verringert werden kann.

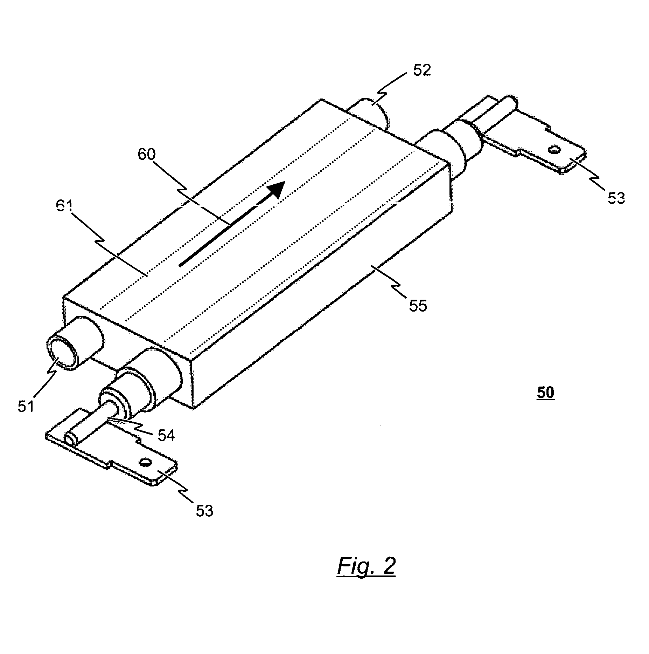

Fig. 2 zeigt eine perspektivische Ansicht eines Kaffee-Nacherhitzers 50, wie er beispielsweise in der in Verbindung mit Fig. 1 erläuterten erfindungsgemässen Brühvorrichtung in Verbindung mit einer Kaffeemaschine 100 zum Einsatz kommen kann.

Wie in Fig. 2 erkennbar, weist der Kaffee-Nacherhitzer 50 ein Gehäuse 55 auf, welches vorzugsweise aus einem möglichst gut wärmeleitenden Material, beispielsweise Aluminium besteht. Wird dieses Gehäuse 55 im Gussverfahren gefertigt, kann es insbesondere als massiver Block ausgebildet sein, wobei das Material, also das Aluminium, ein eingebettetes längliches Heizelement 54 sowie ein benachbart dazu verlaufendes Rohr 61 umschliesst.

Das das Gehäuse 55 durchdringende Rohr 61 stellt den Durchflusspfad des nachzuerhitzenden Getränks dar, wobei die Durchflussrichtung durch einen mit dem Bezugszeichen 60 versehenen Pfeil angedeutet ist. Der Verlauf des Rohrs 61 im Inneren des Gehäuseblocks 55 ist in Fig. 2 schematisch durch parallel zueinander verlaufende gepunktete Linien angedeutet.

Das Rohr weist einen Zuführanschluss 51 sowie einen Ausgabeanschluss 52 auf, wobei die Anschlüsse dazu dienen, den Kaffee-Nacherhitzer 50 in eine Kaffee-Ausgabeleitung 40 einzubauen. Die Kaffee-Ausgabeleitung 40 kann beispielsweise aus zwei Schläuchen gebildet sein, wobei die beiden Schläuche derart dimensioniert sind, dass ein Ende des einen Schlauchs auf den Zuführanschluss 51 steckbar ist und das andere Ende dieses einen Schlauchs den brüheinheitsseitigen Endbereich 41 der Kaffee-Ausgabeleitung 40 bildet und ein Ende des anderen Schlauchs auf den Ausgabeanschluss 52 steckbar ist und das andere Ende dieses anderen Schlauchs den ausgabeseitigen Endbereich 42 der Kaffee-Ausgabeleitung 40 bildet. Alternativ kann der Zuführanschluss 51 des Kaffee-Nacherhitzers 50 auch direkt mit der Brüheinheit 30 verbunden sein, sodass der Zuführanschluss 51 den brüheinheitsseitigen Endbereich 41 der Kaffee-Ausgabeleitung 40 bildet.

Benachbart zum Rohr 61 verläuft ein elektrisches Widerstandsheizelement 54, dessen Verlauf im Inneren des Gehäuses 55 wiederum ebenfalls durch gepunktete Linien angedeutet ist. Zum Zwecke der Stromzufuhr weist das Heizelement 54, welches beispielsweise ein PTC-Heizwiderstand ist, Stromanschlüsse 53 auf. Es bedarf keiner weiteren Ausführung, dass das Heizelement 54 ggf. mit einer elektrischen Isolierung versehen ist, um ein unbeabsichtigtes Kurzschliessen des Strompfads über ein metallisches Gehäuse zu unterbinden.

Nach Anlegen einer entsprechenden elektrischen Spannung an die Stromanschlüsse 53 erwärmt sich das Heizelement 54 und gibt den grössten Teil der so erzeugten Wärme an das gut wärmeleitende Gehäuse 54 ab, womit wiederum eine Wärmeübertragung auf das Rohr 61 erfolgt. Eine durch das Rohr 61 laufende Flüssigkeit, gemäss der vorliegenden Erfindung also nachzuerhitzender Kaffee, wird dabei ebenfalls erwärmt.

Denkbar ist jedoch ebenfalls, das Rohr 61 sowie das Heizelement 54 nicht in einem wärmeleitenden Gehäuse 55 anzuordnen, sondern auf einer Strecke unmittelbar benachbart zueinander zu führen und unter Ausbildung eines wärmeleitenden Übergangs zu verbinden, z.B. zu verschweissen oder zu verkleben.

Ebenso ist die Formgebung des Rohres 61 sowie des Heizelements 54 und ggf. des Gehäuses 55 nicht auf einen im Wesentlichen geraden Verlauf beschränkt. Es ist vielmehr ebenso denkbar, einen solchen Kaffee-Nacherhitzer 50 in einer gebogenen Form, beispielsweise U-förmig gebogen, auszubilden.

Das Rohr 61, welches in der gezeigten Ausführungsform in Durchflussrichtung 60 nahezu vollständig von dem gut wärmeleitenden Material des Gehäuses 55 durch Umgiessen umgeben ist, besteht seinerseits aus Chromstahl oder aus Aluminium. Das Heizelement 54 ist im gezeigten Fall als Heizwiderstand, vorzugsweise als PTC-Heizwiderstand ausgebildet, kann jedoch ebenso beispielsweise als keramische Dickschichtheizung ausgebildet sein. In allen Fällen ist gewährleistet, dass beim Einsatz einer erfindungsgemässen Brühvorrichtung das auszugebende Getränk auch bei einem eventuellen Temperaturverlust während des Brühvorgangs auf eine Getränketemperatur gebracht werden kann, welche im Bereich der optimalen Trinktemperatur liegt.

Die Brühvorrichtung 10 kann derart ausgebildet sein, dass das Heizelement 54 beim Nacherhitzen des jeweils gebrühten Kaffeegetränks jeweils auf eine vorgegebene Temperatur erhitzt wird, wobei der jeweils durch das Heizelement 54 fliessende Strom von der Steuereinheit 29 entsprechend gesteuert wird. Die Temperatur des jeweils gebrühten Kaffeegetränks kann sich bei einem Durchlauf des Kaffeegetränks durch die Kaffee-Ausgabeleitung 40 auf dem Weg zwischen dem Kaffee-Nacherhitzer 50 und den jeweiligen Ausgangsöffnungen 47 verändern, wobei die jeweilige Veränderung der Temperatur des Kaffeegetränks von der momentanen Temperatur der Kaffee-Ausgabeleitung 40 im Bereich zwischen dem Kaffee-Nacherhitzer 50 und den jeweiligen Kaffee-Ausgangsöffnungen 47 abhängig ist. Um zu gewährleisten, dass die Temperatur eines von der Kaffee-Ausgabeeinrichtung 45 ausgegebenen Kaffeegetränks innerhalb vorgegebener Grenzen liegt, kann der jeweils durch das Heizelement 54 fliessende Strom beispielsweise in Abhängigkeit von der momentanen Temperatur der Kaffee-Ausgabeleitung 40 gesteuert werden.

Im vorliegenden Beispiel ist ein Temperatursensor 48 zur Bereitstellung eines Messwerts für eine Temperatur der Kaffeeleitung 46 am ausgabeseitigen Endbereich 42 der Kaffee-Ausgabeleitung 40, beispielsweise in der Nähe der Kaffee-Ausgangsöffnungen 47, angeordnet, wobei der Kaffee-Nacherhitzer 50 mittels der Steuereinheit 29 in Abhängigkeit von dem jeweils bereitgestellten Messwert für die jeweilige Temperatur der Ausgabeleitung (40) steuerbar ist. Zu diesem Zweck ist der Temperatursensor 48 mit der Steuereinheit 29 mittels einer in Fig. 1 dargestellten Verbindung 48.1 verbunden, sodass der Steuereinheit 29 eine Information über die jeweilige vom Temperatursensor 48 gemessene Temperatur der Kaffeeleitung 46 zur Verfügung steht und die Steuereinheit 29 den durch das Heizelement 54 fliessenden Strom in Abhängigkeit von Temperatur-Messwerten des Temperatursensors 48 steuern kann.

Der Temperatursensor 48 kann auch an einem anderen Ort an der Kaffeeleitung 46 platziert sein, beispielsweise an einem Bereich der Kaffee-Ausgabeleitung 40 zwischen dem Kaffee-Nacherhitzer 50 und dem ausgabeseitigen Endbereich 42 der Kaffee-Ausgabeleitung 40 oder am Kaffee-Nacherhitzer 50.

Alternativ können auch mehrere Temperatursensoren an der Kaffeeleitung 46 (entlang der Kaffeeleitung 46 verteilt) und/oder ein oder mehrere Temperatursensoren an der Kaffee-Ausgabeleitung 40 (zur Messung der Temperatur der Kaffee-Ausgabeleitung 40 an verschieden Orten) angeordnet sein, wobei die jeweiligen Temperatursensoren mit der Steuereinheit 29 verbunden sein können, sodass der Steuereinheit 29 eine Information über die von den jeweiligen Temperatursensoren gemessenen Temperaturen der Kaffee-Ausgabeleitung 40 zur Verfügung stehen und die Steuereinheit 29 den durch das Heizelement 54 fliessenden Strom in Abhängigkeit von den jeweiligen Temperatur-Messwerten der jeweiligen Temperatursensoren steuern kann.

Die Kaffeemaschine 100 kann derart ausgebildet sein, dass die Temperatur eines von der Kaffee-Ausgabeeinrichtung 45 ausgegebenen Kaffeegetränks von einem Benutzer beeinflussbar ist, wobei der Benutzer einen Sollwert der Temperatur, welche ein aus der Kaffee-Ausgabeleitung 40 ausgegebenes Kaffeegetränk aufweist, vor der Bereitung des jeweiligen Kaffeegetränks mit einem Vorwahlmittel auswählen kann. Zu diesem Zweck kann der Kaffee-Nacherhitzer 50 mittels der Steuereinheit 29 in Abhängigkeit von dem jeweils vorgewählten Sollwert steuerbar sein. Die Steuereinheit 29 kann insbesondere den durch das Heizelement 54 fliessenden Strom in Abhängigkeit von dem jeweils vorgewählten Sollwert steuern. Weiterhin kann der jeweils vorgewählte Sollwert auch mithilfe des Vorwahlmittels in einem vorgegebenen Temperaturbereich veränderbar sein.

Die Auswahl des jeweiligen Sollwertes kann mit konventionellen Mitteln erfolgen. Die in Fig.1 dargestellte Kaffeemaschine 100 weist beispielsweise ein Vorwahlmittel 70 zum Vorwählen eines Sollwertes der Temperatur eines aus der Kaffee-Ausgabeleitung 40 ausgegebenen Kaffeegetränks auf, welches als Tastatur mit mehreren Tasten 70.2 realisiert ist. Die Tasten 70.2 sind jeweils verschiedenen Sollwerten der Temperatur eines aus der Kaffee-Ausgabeleitung 40 ausgegebenen Kaffeegetränks zugeordnet, beispielsweise verschiedenen Werten in einem Temperaturbereich zwischen 80°C und 95°C. Durch Drücken der jeweiligen Tasten 70.2 kann demnach der jeweilige Sollwert stufenweise verändert werden. Wie Fig. 1 andeutet, ist das Vorwahlmittel 70 mit der Steuereinheit 29 mittels einer Verbindung 70.1 verbunden, sodass ein mittels der Tasten 70.2 ausgewählter Sollwert an die Steuereinheit 29 übermittelt werden kann und dieser Sollwert von der Steuereinheit 29 beim Steuern des Kaffee-Nacherhitzers 50 bzw. beim Steuern des durch das Heizelement 54 fliessenden Stroms berücksichtigt werden kann.

Das Vorwahlmittel 70 kann selbstverständlich durch Vorwahlmittel anderer Bauart ersetzt werden, beispielsweise durch einen Drehknopf, einen Schieberegler, einen berührungsempfindlichen Bildschirm, eine numerische Tastatur zur Eingabe des jeweiligen Sollwerts oder andere Mittel, welche eine kontinuierliche oder schrittweise Veränderung des Sollwerts ermöglichen.

Der Kaffee-Nacherhitzer 50 kann im Rahmen der vorliegenden Erfindung auch durch einen Durchlauferhitzer anderer Bauart ersetzt werden, beispielsweise durch ein rohrförmiges Heizglaselement (z.B. in Form eines Rohres aus Glas mit integrierten Heizwiderständen aus Draht) oder durch ein induktiv heizbares Rohr.

## Patentansprüche

1. Brühvorrichtung (10) mit einer Brüheinheit (30) zum Brühen eines Kaffeegetränkes, wobei die Brüheinheit (30) mit einer Brühwasser-Zuführleitung (31) zum Zuführen von Brühwasser in die Brüheinheit (30) und mit einer Kaffee-Ausgabeleitung (40) zur Ausgabe eines in der Brüheinheit gebrühten Kaffeegetränkes verbunden ist, welche Kaffee-Ausgabeleitung (40) einen mit der Brüheinheit (30) verbundenen eingangsseitigen Endbereich (41) zur Aufnahme des jeweils gebrühten Kaffeegetränks und einen ausgabeseitigen Endbereich (42) zur Ausgabe des jeweils gebrühten Kaffeegetränks aufweist,
**dadurch gekennzeichnet, dass**
die Brühvorrichtung (10) ferner einen Kaffee-Nacherhitzer (50) zum Nacherhitzen des jeweils gebrühten Kaffeegetränks in der Kaffee-Ausgabeleitung (40) aufweist, wobei der Kaffee-Nacherhitzer (50) zwischen dem eingangsseitigen Endbereich (41) der Kaffee-Ausgabeleitung (40) und dem ausgabeseitigen Endbereich (42) der Kaffee-Ausgabeleitung (40) angeordnet ist.

2. Brühvorrichtung (10) nach Anspruch 1,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist.

3. Brühvorrichtung (10) nach Anspruch 2,
wobei die Brühvorrichtung (10) ferner eine Steuereinheit (29) aufweist, welche mit der mindestens einen Einrichtung zum Erkennen einer Wasserzufuhr zu der Brüheinheit (30) und/oder mit der mindestens einen Einrichtung zum Erkennen einer Kaffeegetränkzufuhr in die Kaffee-Ausgabeleitung (40) verbunden ist,
wobei die Steuereinheit (29) ausgelegt ist, den Kaffee-Nacherhitzer (50) dann in Betrieb zu setzen, wenn erkannt wird, dass Wasser der Brüheinheit (30) zugeführt wird, oder
wobei die Steuereinheit (29) ausgelegt ist, den Kaffee-Nacherhitzer (50) dann in Betrieb zu setzen, wenn erkannt wird, dass ein Kaffeegetränk der Kaffee-Ausgabeleitung (40) zugeführt wird.

4. Brühvorrichtung (10) nach Anspruch 2,
wobei die Brühvorrichtung (10) ferner eine Steuereinheit (29) aufweist, welche mit der mindestens einen Einrichtung zum Erkennen einer Wasserzufuhr zu der Brüheinheit (30) und/oder mit der mindestens einen Einrichtung zum Erkennen einer Kaffeegetränkzufuhr in die Kaffee-Ausgabeleitung (40) verbunden ist, wobei die Steuereinheit (29) ausgelegt ist, den Kaffee-Nacherhitzer (50) dann in Betrieb zu setzen, wenn erkannt wird, dass die Zufuhr von Wasser zu der Brüheinheit (30) oder die Zufuhr von Kaffeegetränk in die Kaffee-Ausgabeleitung (40) beendet ist.

5. Brühvorrichtung nach einem der Ansprüche 3 oder 4, mit einem Vorwahlmittel (70) zum Vorwählen eines Sollwertes der Temperatur, welche ein aus der Kaffee-Ausgabeleitung (40) ausgegebenes Kaffeegetränk aufweist, wobei der jeweils vorgewählte Sollwert mithilfe des Vorwahlmittels (70) in einem vorgegebenen Temperaturbereich veränderbar ist und der Kaffee-Nacherhitzer (50) mittels der Steuereinheit (29) in Abhängigkeit von dem jeweils vorgewählten Sollwert steuerbar ist.

6. Brühvorrichtung nach einem der Ansprüche 3-5, mit einem oder mehreren Temperatursensoren (48) zur Bereitstellung eines Messwerts für eine Temperatur der Kaffee-Ausgabeleitung (40), wobei der Kaffee-Nacherhitzer (50) mittels der Steuereinheit (29) in Abhängigkeit von dem jeweils bereitgestellten Messwert für die jeweilige Temperatur der Ausgabeleitung (40) steuerbar ist.

7. Brühvorrichtung nach Anspruch 6, wobei mindestens einer der jeweiligen Temperatursensoren (70) am ausgabeseitigen Endbereich (42) der Kaffee-Ausgabeleitung (40) oder an einem Bereich der Kaffee-Ausgabeleitung (40) zwischen dem Kaffee-Nacherhitzer (50) und dem ausgabeseitigen Endbereich (42) der Kaffee-Ausgabeleitung (40) oder am Kaffee-Nacherhitzer (50) angeordnet ist.

8. Brühvorrichtung (10) nach einem der vorhergehenden Ansprüche,
wobei der Kaffee-Nacherhitzer (50) einen Kaffee-Zufuhranschluss (51) und einen Kaffee-Ausgabeanschluss (52) sowie ein Heizelement (50) mit mindestens einem Stromanschluss (53) aufweist, und wobei der Kaffee-Zufuhranschluss (51) und der Kaffee-Ausgabeanschluss (52) in jeweils gegenüberliegenden Enden eines benachbart zu dem Heizelement (54) verlaufenden Rohres (61) münden.

9. Brühvorrichtung nach Anspruch 8,
wobei das Rohr (61) mit dem benachbart verlaufenden Heizelement (54) zumindest bereichsweise fest verbunden und/oder verschweisst und/oder verklebt ist.

10. Brühvorrichtung nach einem der Ansprüche 8 oder 9,
wobei der Kaffee-Nacherhitzer (50) ferner ein Gehäuse (55) aus einem wärmeleitenden Material aufweist, wobei das Gehäuse (55) derart ausgebildet ist, dass das wärmeleitende Material des Gehäuses (55) zumindest bereichsweise das Rohr (61) und das Heizelement (54) umgibt.

11. Brühvorrichtung nach einem der Ansprüche 8 bis 10, wobei das Rohr (61) aus Chromstahl oder aus Aluminium besteht.

12. Brühvorrichtung nach einem der Ansprüche 8 bis 11, wobei das Heizelement (54) eine keramische Dickschichtheizung oder ein PTC-Heizwiderstand ist.

13. Kaffeemaschine (100), welche eine Brühvorrichtung (10) nach einem der Ansprüche 1 bis 12 sowie einen Wassertank (20), einen Brühwassererhitzer (24), eine Pumpe (23), ein Auslaufventil (27) und eine Kaffee-Ausgabeeinrichtung (45) aufweist, wobei die Brühwasser-Zufuhrleitung (31) der Brühvorrichtung (10) mit der Pumpe (23) und der ausgabeseitige Endbereich (42) der Kaffee-Ausgabeleitung (40) mit der Kaffee-Ausgabeeinrichtung (45) verbunden sind.

14. Verfahren zum Brühen und Ausgeben eines Kaffeegetränkes mittels einer Brühvorrichtung (10), welche Brühvorrichtung (10)eine Brüheinheit (30) zum Brühen eines Kaffeegetränkes umfasst, wobei die Brüheinheit (30) mit einer Brühwasser-Zuführleitung (31) zur Zufuhr von Brühwasser in die Brüheinheit (30) und mit einer Kaffee-Ausgabeleitung (40) zur Ausgabe eines in der Brüheinheit (30) gebrühten Kaffeegetränkes verbunden ist, welche Kaffee-Ausgabeleitung (40) einen mit der Brüheinheit (30) verbundenen eingangsseitigen Endbereich (41) zur Aufnahme des jeweils gebrühten Kaffeegetränks und einen ausgabeseitigen Endbereich (42) zur Ausgabe des jeweils gebrühten Kaffeegetränks aufweist, wobei das Verfahren die folgenden Verfahrensschritte aufweist:
a) die Brüheinheit (30) wird in einen brühbereiten Zustand versetzt;
b) auf Brühtemperatur erhitztes Brühwasser wird durch die Brühwasser-Zuführleitung (31) dem Brühwassereingang der Brüheinheit (30) zugeführt;
c) in der Brüheinheit (30) wird ein Kaffeegetränk gebrüht;
d) das gebrühte Kaffeegetränk wird in die Kaffee-Ausgabeleitung (40) ausgegeben, sodass das Kaffeegetränk die Kaffee-Ausgabeleitung durchfliesst; und
e) der Kaffee-Nacherhitzer (50) wird in Betrieb gesetzt und erhitzt das die Kaffee-Ausgabeleitung (40) durchfliessende Kaffeegetränk.

15. Verfahren nach Anspruch 14,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist,
wobei der Verfahrensschritt e) durchgeführt wird, wenn erkannt wird, dass Wasser der Brüheinheit (30) zugeführt wird, oder
wobei der Verfahrensschritt e) durchgeführt wird, wenn erkannt wird, dass ein Kaffeegetränk der Kaffee-Ausgabeleitung (40) zugeführt wird.

16. Verfahren nach Anspruch 14,
wobei die Brühvorrichtung (10) ferner mindestens eine Einrichtung (22) zum Erkennen einer Wasserzufuhr zu der Brüheinheit (30) und/oder mindestens eine Einrichtung zum Erkennen einer Kaffeegetränkzufuhr in die Kaffee-Ausgabeleitung (40) aufweist,
wobei der Verfahrensschritt e) durchgeführt wird, wenn erkannt wird, dass die Zufuhr von Wasser zu der Brüheinheit (30) oder die Zufuhr von Kaffeegetränk in die Kaffee-Ausgabeleitung (40) beendet ist.
